# EUROPÄISCHE PATENTSCHRIFT

(11) **EP 1 732 773 B1**
(45) Veröffentlichungstag und Bekanntmachung des Hinweises auf die Patenterteilung: **10.12.2008**
(21) Anmeldenummer: 04739076.0
(22) Anmeldetag: 06.04.2004
(51) Int. Cl.: B60C 27/02, B60C 27/04

(54) **VORRICHTUNG ZUR LÖSBAREN ANBRINGUNG EINER TRAKTIONSHILFE AN EINEM EINE FELGE UND EINEN REIFEN MIT LAUFFLÄCHE AUFWEISENDEN FAHRZEUGRAD**
DEVICE FOR THE DETACHABLE FITTING OF A TRACTION AID TO VEHICLE WHEELS COMPRISING A RIM AND A TYRE WITH RUNNING SURFACES
DISPOSITIF PERMETTANT DE POSER, DE MANIERE AMOVIBLE, UN ACCESSOIRE D'AIDE A LA TRACTION SUR UNE ROUE DE VEHICULE PRESENTANT UNE JANTE ET UN PNEU

(43) Veröffentlichungstag der Anmeldung: 20.12.2006
(73) Patentinhaber: Stegmair, Michael, 86551 Aichach-Untermauerbach (DE)
(72) Erfinder: Stegmair, Michael, 86551 Aichach-Untermauerbach (DE)
(74) Vertreter: Grüter, Klaus Peter
(86) Internationale Anmeldenummer: PCT/EP2004/003634
(87) Internationale Veröffentlichungsnummer: WO 2005/108125

(56) Entgegenhaltungen:
- WO-A-96/34773
- DE-A- 2 219 730
- DE-A- 3 715 264
- DE-C- 829 093
- US-A- 1 441 198
- US-A- 1 540 576
- US-A- 1 665 478
- US-A- 2 750 981

## Beschreibung

Die Erfindung betrifft eine Vorrichtung zur lösbaren Anbringung einer Traktionshilfe an einem eine Felge und einen Reifen mit Lauffläche aufweisenden Fahrzeugrad gemäß dem Oberbegriff des Anspruchs 1.

Derartige Traktionshilfen sind beispielsweise als Schneeketten bekannt, die eine Art langgestrecktes Kettennetz bilden und die in der Regel derart montiert werden, dass man zunächst in Laufrichtung des mit einer solchen zu versehenden Reifens das Kettennetz in seiner Längsrichtung auslegt, anschließend mit dem Reifen auf das Kettennetz fährt und sodann die beiden Enden des Kettennetzes um die Reifen legt und zusammenspannt. Nach einer kurzen Fahrstrecke erfolgt ein Nachspannen, das nach weiteren kurzen Strecken solange wiederholt wird, bis die Schneekette unter einer ausreichenden Spannung steht.

Die Anbringung einer Schneekette wird schwieriger, wenn sich das betreffende Fahrzeug bereits im Schnee festgefahren hat. Dann ist zu empfehlen, die Schneekette auf die Oberseite des Reifens zu legen und das Fahrzeugrad zu drehen, bis sich der zurächst auf der Oberseite liegende Teil unter dem Reifen befindet. Dann wird der Rest der Schneekette um den Reifen gelegt und die Kette ein erstes Mal gespannt, weiter verfährt man wie oben angegeben.

Aus der US-A-1 540 576, der WO 96/34773 A, der US-A-1 665 478 und der US-A-1 441 198 ist jeweils eine gattungsgemäße Vorrichtung zur lösbaren Anbringung einer Traktionshilfe an einem eine Felge und einen Reifen mit Lauffläche aufweisenden Fahrzeugrad bekannt.

Die der Erfindung zugrunde liegende Aufgabe wird darin gesehen, eine Vorrichtung der genannten Art zu schaffen, bei der sich die Traktionshilfe auf einfachere Weise und weniger umständlich anbringen lässt, und zwar eben auch dann, wenn die Antriebsreifen auf glitschigem Untergrund, sei dieser nun Schnee oder auch Sand oder dergleichen, durchdrehen und sich das betreffende Fahrzeug somit festgefahren hat.

Diese Aufgabe wird bei einer Vorrichtung der eingangs genannten Art erfindungsgemäß u.a. gelöst durch mindestens zwei auf der Innenumfangsfläche der Felge jeweils im Bereich der Felgenränder festgelegte Befestigungseinrichtungen, die einander im wesentlichen lotrecht zur Felgenebene gegenüberliegend und miteinander fluchtend als Paar zugeordnet sind und von denen die der Radinnenseite zugewandte erste Befestigungseinrichtung mit einem ersten Befestigungselement zum Ein- und Aushängen eines an dem einen Ende der Traktionshilfe angebrachten, zu diesem ersten Befestigungselement komplementären zweiten Befestigungselements dient, während die der Radaußenseite zugewandte zweite Befestigungseinrichtung mit einem zweiten Befestigungselement in Form einer Anlenkeinrichtung zum Anlenken und Festspannen eines an dem anderen Ende der Traktionshilfe angebrachten Spannelements versehen ist, derart, dass die Traktionshilfe quer über den Reifen zwischen den beiden Befestigungseinrichtungen auf der Lauffläche festspannbar ist.

Die erfindungsgemäße Vorrichtung ermöglicht es, auf einem oben - und damit freiliegenden - Teil der Lauffläche des Fahrzeugrades, also in einem frei zugänglichen Bereich desselben, eine Traktionshilfe festzuspannen, die somit lediglich einen Teil der gesamten Lauffläche des Reifens des Fahrzeugrades überdeckt. Bereits dies kann gegebenenfalls genügen, dem betreffenden Antriebsrad ausreichend Bodenhaftung zu verschaffen, um dem entsprechend ausgerüsteten Fahrzeug über eine schwierige Bodenstelle hinwegzuhelfen.

Nun können jedoch vorteilhaft über die Innenumfangsfläche der Felge verteilt in gleichen Abständen voneinander mehrere Paare von Befestigungseinrichtungen angeordnet sein, derart, dass beispielsweise rechts und links vom ersten Paar zwei weitere Paare von Befestigungselementen vorhanden sein können, an denen sich zwei weitere Traktionshilfen festspannen lassen.

Sind entsprechend einer bevorzugten Ausführungsform der Erfindung fünf solche Paare von Befestigungselementen in der erläuterten Weise auf der Innenumfangsfläche der Felge des Fahrzeugrades verteilt, dann bedarf es lediglich einer Drehung dieses angetriebenen Fahrzeugrades um etwa 180°, um auch die übrigen beiden Traktionshilfen an den verbleibenden beiden Paaren von Befestigungseinrichtungen befestigen zu können, sodass eine über den Radumfang gleichmäßige Traktionsverteilung gegeben ist. Es versteht sich, dass die Anzahl der auf der Innenumfangsseite verteilten Paare von Befestigungseinrichtungen sowohl kleiner als auch größer als fünf sein kann, beispielsweise in Abhängigkeit vom Felgendurchmesser, derart, dass bei größerem Felgendurchmesser auch eine größere Anzahl an Paaren angebracht ist und damit entsprechend viele Traktionshilfen angebracht werden können. Andererseits ist es nicht zwingend, dass im Einsatzfalle sämtliche vorhandenen Paare von Befestigungseinrichtungen mit Traktionshilfen versehen werden, denn es kann bzw. können, wie weiter oben bereits angedeutet wurde, gegebenenfalls auch nur eine, zwei oder drei Traktionshilfen ausreichen, um dem betreffenden Fahrzeugrad eine ausreichende Bodenreibung zu vermitteln und für einen ausreichenden Vortrieb des betreffenden Fahrzeugs zu sorgen.

Erfindungsgemäß ist mindestens eine auf der Innenumfangsfläche der Felge quer zur Felgenebene befestigte und sich im wesentlichen über deren Breite erstreckende Befestigungsbrücke vorgesehen, an deren beiden Enden die ein Paar bildenden Befestigungseinrichtungen angeordnet sind. Die Anbringung einer solchen, an ihren Enden die Befestigungseinrichtungen aufweisenden, Befestigungsbrücke an einer Felge ist dann besonders angebracht, wenn deren Felgenschüssel zur Umfangsfläche der Felge hin Durchbrechungen aufweist oder mit Speichen versehen ist, die naturgemäß dort, wo sie in die Innenumfangsfläche der Felge übergehen, Abstände voreinander aufweisen. Dann kann die Anordnung nämlich vorteilhaft derart getroffen werden, dass sich die jeweilige Befestigungsbrücke durch eine solche Durchbrechung bzw. zwischen zwei Speichen hindurcherstreckt.

Die Befestigung geschieht zweckmäßig mittels Schweißung, es ist jedoch auch ein Festschrauben der Befestigungsbrücke bzw. - brücken an der Innenumfangsseite der Felge möglich, womit sogar eine Lösbarkeit der Befestigungsbrücken vorgesehen sein kann.

Dies würde es beispielsweise ermöglichen, die Befestigungsbrücken nicht ständig mitzuführen, sondern dieselben erst zu Beginn der kalten Jahreszeit anzubringen, dies insbesondere dann, wenn im Falle von Personenkraftwagen die Befestigungsbrücken als optisch störend empfunden würden. Bei Nutzfahrzeugen, insbesondere Lastkraftwagen, wird dieser Gesichtspunkt naturgemäß eine geringere Bedeutung haben.

Abgesehen davon können ganz allgemein die Befestigungsbrücken gegebenenfalls von Radkappen verdeckt werden.

Wie dargelegt, ist dem Paar von Befestigungseinrichtungen jeder Befestigungsbrücke eine gesonderte Traktionshilfe zugeordnet.

Dabei ist zweckmäßig das erste Befestigungselement an der ersten Befestigungseinrichtung der Befestigungsbrücke eine Öse und das dazu komplementäre zweite Befestigungselement an dem einen Ende der Traktionshilfe ein in die Öse einhängbarer Haken. Dies gewährleistet ein einfaches Anbringen der Traktionshilfe auf der Radinnenseite.

Vorteilhaft ist das Spannelement am anderen Ende der Traktionshilfe mittels eines einerseits durch das Spannelement und andererseits durch einen am anderen Ende der Traktionshilfe angebrachten Beschlag hindurchtretenden ersten Achsbolzens angebracht.

Der Beschlag besteht zweckmäßig aus einem an der Traktionshilfe angreifenden Kettenglied, an das zu dessen beiden Seiten parallelflächig zueinander zwei Laschen mit den einander gegenüberliegenden Flächen ihrer jeweils einen Enden angeschweißt sind, während die anderen Enden der Laschen zwischen sich das Spannelement und den ersten Achsbolzen aufnehmen, der durch entsprechende erste Bohrungen in den Laschen einerseits und dem Spannelement andererseits hindurchtritt und versplintbar ist.

Erfindungsgemäß ist die Befestigungsbrücke als Doppelsteg mit zwei in Abstand voneinander und parallel zueinander ausgebildeten Teilstegen gestaltet, was ihre Stabilität verstärkt und die Anlenkung des Spannelements vereinfacht.

Das Spannelement ist vorteilhaft ein Spannhebel, dessen Dicke kleiner ist als der Abstand zwischen den Teilstege und der sich zwischen die beiden Teilstege einsetzen lässt. Der Spannhebel ist ferner mittels eines, in fluchtende zweite Bohrungen im dem anderen Ende der Traktionshilfe zugewandten Ende des Spannhebels einerseits und in den beiden Teilstegen andererseits einsetzbaren und versplintbaren, vom ersten Achsbolzen quer zur Spannrichtung und zur Innenumfangfläche hin einen Abstand aufweisenden, zweiten Achsbolzens an den Teilstegen anlenkbar. Dadurch, dass ein Abstand zwischen dem ersten und dem zweiten Achsbolzen vorhanden ist, ist Exzentrizität des ersten Achsbolzen gegenüber dem zweiten Achsbolzen gegeben, sodass ein Verschwenken des Spannhebels in Richtung auf die Felge zu einem Spannen der auf der anderen Seite der Felge eingehängten und über die Lauffläche des Reifens gelegten Traktionshilfe führt.

Auf diese Weise lässt sich somit schnell und einfach das andere Ende der Traktionshilfe am zweiten Befestigungselement der Befestigungsbrücke bzw. des Doppelstegs befestigen und spannen.

Vorteilhaft ist der Spannhebel mittels eines, in Längsrichtung des Spannhebels im Abstand vom zweiten Achsbolzen in miteinander fluchtende dritte Bohrungen im dem anderen Ende der Traktionshilfe abgewandten Bereich des Spannhebels einerseits und im Doppelsteg andererseits einsetzbaren, versplintbaren, und wieder lösbaren Arretierbolzens unter Spannung der Traktionshilfe am Befestigungssteg lösbar festlegbar.

Dabei sind zweckmäßig auf einem Schwenkkreis des Spannhebels um den zweiten Achsbolzen und in dem genannten Abstand von diesem eine Mehrzahl von in Schwenkrichtung in Abstand voneinander angeordneten und miteinander fluchtenden dritten Bohrungen zur Aufnahme eines Arretierbolzens im Doppelsteg vorgesehen, derart, dass der Spannhebel in unterschiedlichen Spannstellungen festlegbar ist.

Dabei ist es von Vorteil, wenn im Spannhebel auf dem gleichen Schwenkkreis um den zweiten Achsbolzen zumindest zwei Bohrungen für den Arretierbolzen vorgesehen sind, wobei der Abstand zwischen jeweils zwei dieser Bohrungen im Spannhebel größer ist als der Abstand zwischen jeweils zwei miteinander fluchtenden Bohrungen im Doppelsteg.

Vorzugsweise ist jede Traktionshilfe eine mittels zweier in Umfangsrichtung des Reifens zu beiden Seiten an den Flanken desselben angeordneter stabförmiger Abstandshalter ausgebreitete Kettenschlinge, derart, dass jeweils zwei Kettenschlingenabschnitte in einem der Länge der Abstandshalter entsprechenden Abstand voneinander über die Lauffläche des Reifens gespannt sind.

Die Erfindung ist im folgenden anhand eines in der Zeichnung dargestellten, bevorzugten Ausführungsbeispiels näher erläutert.

Es zeigt:
Fig. 1 eine Draufsicht auf die Außenseite eines mit fünf erfindungsgemäßen Vorrichtungen versehenen Fahrzeugrades;
Fig. 2 einen Ausschnitt aus einer der Fig. 1 entsprechenden Draufsicht auf einen ein Paar Befestigungseinrichtungen aufweisenden Doppelsteg mit Spannhebel in vergrößertem Maßstab;
Fig. 3 einen Schnitt längs der Linie III-III in Fig. 1;
Fig. 4 einen Ausschnitt der Fig. 3 in vergrößertem Maßstab;
Fig. 5 einen Ausschnitt der Fig. 4 in Pfeilrichtung V;
Fig. 6 eine Draufsicht auf eine Fraktionshilfe.

Die Figuren zeigen eine bevorzugte Ausführungsform einer erfindungsgemäßen Vorrichtung zur lösbaren Anbringung einer Traktionshilfe 1 an einem eine Felge 2 und einen Reifen 3 mit Lauffläche 4 aufweisenden Fahrzeugrad 5. Die Felge 2 besitzt dabei eine Felgenschüssel 6, die zur Innenumfangsfläche 7 der Felge 2 hin Durchbrechungen 8 aufweist.

Bei der gezeigten Ausführungsform besitzt die Felgenschüssel 6 zehn derartige Durchbrechungen 8.

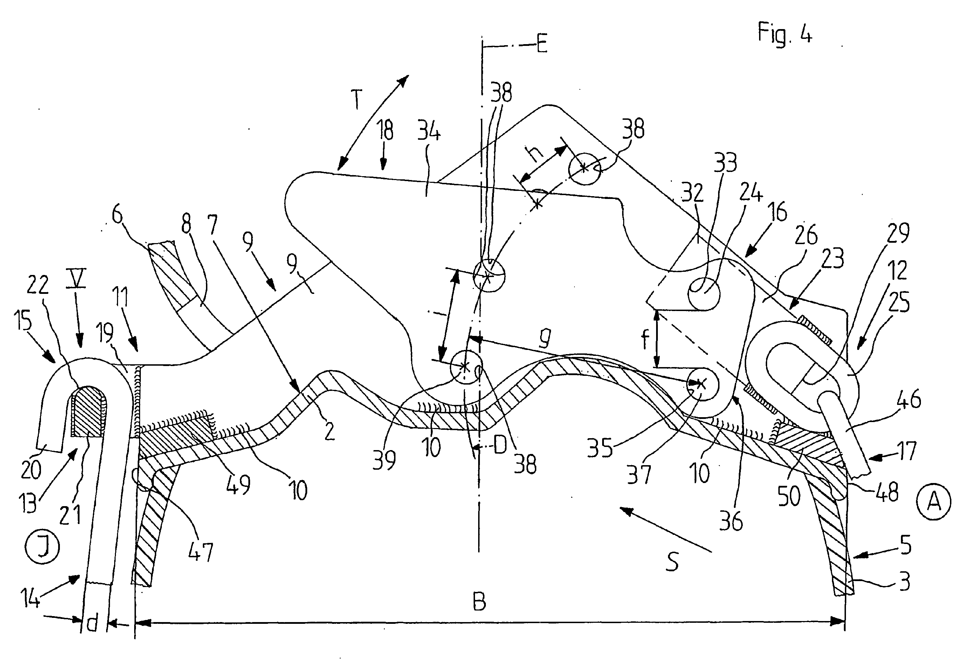

Erfindungsgemäß ist mindestens eine auf der Innenumfangsfläche 7 der Felge 2 quer zur Felgenebene (welche parallel zur Zeichenebene verläuft) befestigte und sich im wesentlichen über deren Breite B (Fig. 4) erstreckende Befestigungsbrücke 9 vorgesehen. Im vorliegenden Fall ist diese Befestigungsbrücke 9 als Doppelsteg an der Innenumfangsfläche 7 der Felge 2 mit Schweißnähten 10 befestigt.

Der Doppelsteg 9 weist jeweils ein Paar aus einer ersten und einer zweiten Befestigungseinrichtung 11 bzw. 12 auf. An der der Radinnenseite I zugewandten ersten Befestigungseinrichtung 11 des Doppelstegs 9 ist ein erstes Befestigungselement 13 zum Ein- und Aushängen eines an dem einen Ende 14 der Traktionshilfe 1 angebrachten, zu dem ersten Befestigungselement 13 komplementären zweiten Befestigungselements 15 angebracht.

Ferner ist an der der Radaußenseite A zugewandten zweiten Befestigungseinrichtung 12 des Doppelstegs 2 eine Anlenkeinrichtung 16 zum Anlenken und Festspannen eines an dem anderen Ende 17 der Traktionshilfe 1 angebrachten Spannelements 18 vorgesehen, derart, dass die Traktionshilfe 1 quer über den Reifen 3 hinweg zwischen den beiden Enden 11 und 12 des Befestigungsstegs 9 auf der Lauffläche 4 festspannbar ist.

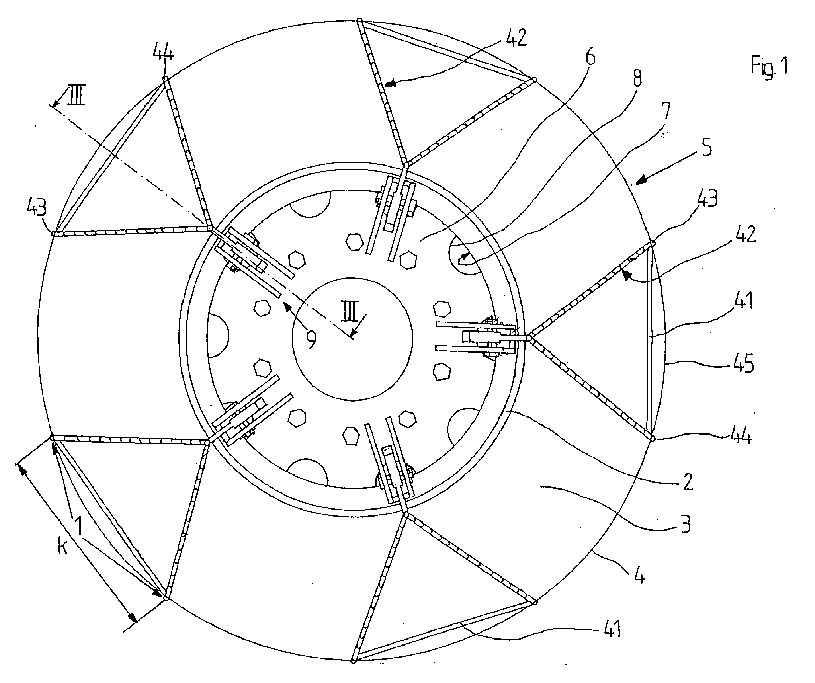

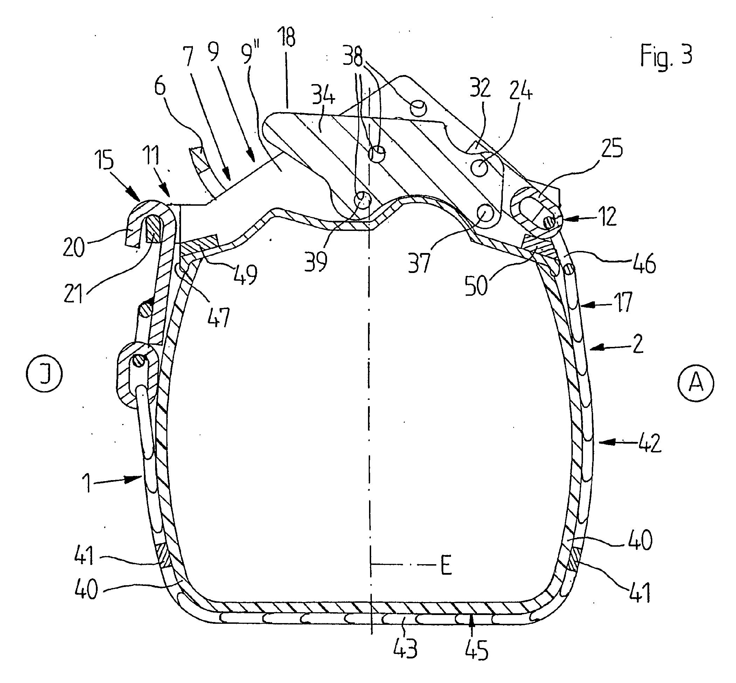

Wie aus den Figuren 1 bis 4 hervorgeht, erstreckt sich der Doppelsteg 9 jeweils durch eine Durchbrechung 8 hindurch. Wie ersichtlich, erstrecken sich mehrere Doppelstege 9 über die Innenumfangsfläche 7 verteilt in gleichen Abständen voneinander durch entsprechend verteilt angeordnete Durchbrechungen 8 hindurch, wobei die gezeigte Ausführungsform fünf derartige Doppelstege 9 aufweist. Da zehn Durchbrechungen 8 vorhanden sind, erstreckt sich somit durch jede zweite Durchbrechung 8 ein Doppelsteg 9.

Erfindungsgemäß ist nun ersichtlich jedem Doppelsteg 9 eine gesonderte Traktionshilfe 1 zugeordnet.

Bei der gezeigten Ausführungsform ist das erste Befestigungselement 13 an der ersten Befestigungseinrichtung 11 des Doppelstegs 9 eine Öse 19 und das dazu komplementäre zweite Befestigungselement 15 an dem einen Ende 14 der Traktionshilfe 1 ein in die Öse 19 einhängbarer Haken 20.

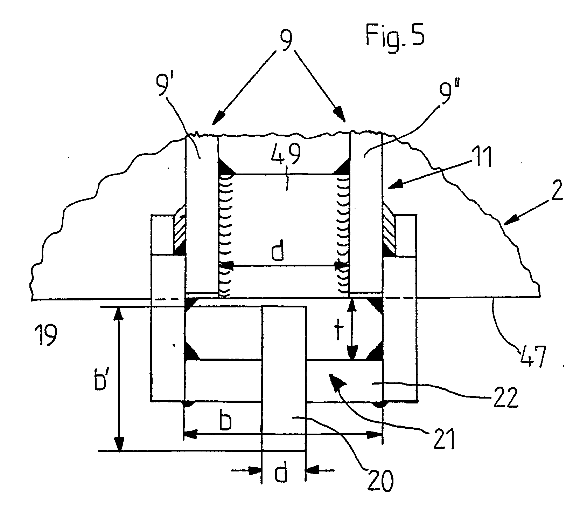

Wie die Figuren 4 und 5 deutlich zeigen, ist dabei vorteilhaft die Öse 19 derart ausgebildet, dass ihre lotrecht zur Radebene (die der Mittelebene E in Fig. 4 entspricht) angeordnete Tiefe t größer ist als der Durchmesser d des Stangenmaterials des Hakens 20, ihre Breite b hingegen etwas größer als die Breite b' des gebogenen Teils des Hakens 20 (Fig. 5). Dies führt dazu, dass der Haken 20 nur in um 90° gegenüber seiner in den Figuren 4 und 5 gezeigten Stellung gedreht von unten her (Fig. 4) in die Öse 19 einführbar ist und sich nach anschließende Zurückdrehen an einem Querriegel 21 der Öse 19 einhängen lässt, wobei dieser Querriegel 21 an seiner Oberseite 22 zweckmäßig der Hakenbiegung entsprechend abgerundet ist (Fig. 4). Dies sorgt für eine zuverlässige Verankerung des Hakens 20 an der Öse 19, ohne dass bei einem stärkeren Durchfedern des Reifens 3 bei z.B. zu geringem Luftdruck ein selbsttätiges Aushängen des Hakens 20 aus der Öse 19 zu befürchten wäre.

Das Spannelement 18 am anderen Ende 17 der Traktionshilfe ist mittels eines einerseits durch das Spannelement 18 und andererseits durch einen am anderen Ende 17 der Traktionshilfe 1 befestigten Beschlag 23 hindurchtretenden ersten Achsbolzen 24 angebracht. Der Beschlag 23 besteht dabei vorteilhaft aus einem an der Traktionshilfe 1 angreifenden Kettenglied 25, an das zu dessen beiden Seiten parallelflächig zueinander zwei Laschen 26 mit den einander gegenüberliegenden Flächen 27 und 28 ihrer jeweils einen Enden 29 und 30 angeschweißt sind. Die anderen Enden 31 und 32 der Laschen 26 nehmen zwischen sich das Spannelement 18 und den ersten Achsbolzen 24 auf, der durch entsprechende erste Bohrungen 33 in den Laschen 26 einerseits und dem Spannelement 18 andererseits hindurchtritt und mit einem Splint gesichert ist.

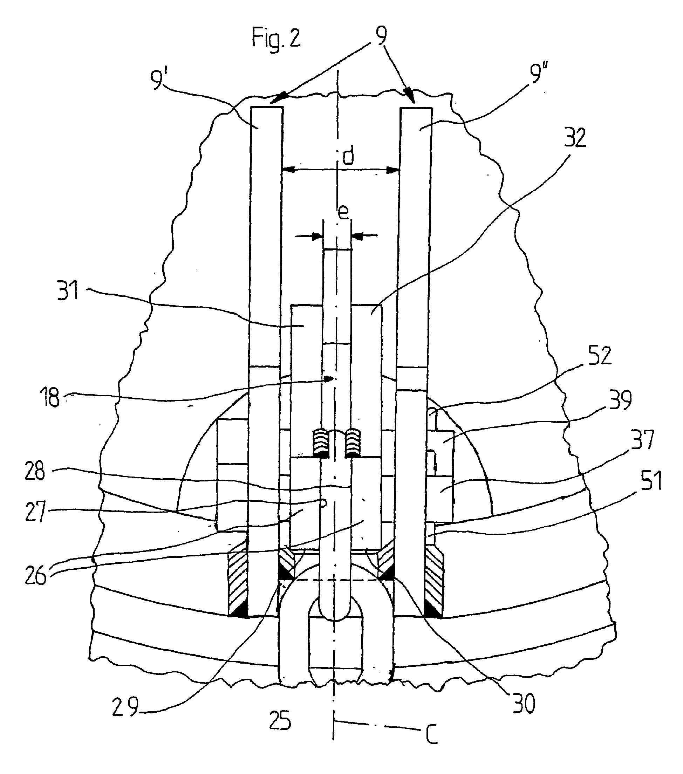

Erfindungsgemäß besitzt der Doppelsteg zwei in Abstand d voneinander (Fig. 2) und parallel zueinander angeordnete Teilstege 9' und 9". Um den erforderlichen Abstand zwischen den Teilstegen 9' und 9" zu gewährleisten, sind an den beiden jeweiligen Enden 11 und 12 des Doppelstegs 9 bevorzugt Abstandshalter 49 und 50 eingeschweißt. Diese Abstandshalter sorgen gleichzeitig für einen Schutz der jeweiligen Felgenränder 47 und 48 gegenüber dem Haken 20 einerseits und den an den Beschlag 23 angrenzenden Kettenglieder 25 und 46 andererseits.

Das Spannelement 18 ist zweckmäßig ein Spannhebel 34, dessen Dicke e kleiner ist als der Abstand d zwischen den Teilstegen 9' und 9" und der sich zwischen die beiden Teilstege 9' und 9" einsetzen lässt.

Ferner ist der Spannhebel 34 mittels eines, in miteinander fluchtende zweite Bohrungen 35 (Fig. 4) im dem anderen Ende 17 der Traktionshilfe 1 zugewandten Ende 36 des Spannhebels 34 einerseits und in den beiden Teilstegen 9' und 9" andererseits einsetzbaren und vorsplintbaren (Splint 51), vom ersten Achsbolzen 24 quer zur Spannrichtung S und zur Innenumfangfläche 7 hin versetzt einen Abstand f aufweisenden, zweiten Achsbolzens 37 an den Teilstegen 9' und 9" anlenkbar, derart, dass durch den Abstand f zwischen ihnen eine Exzentrizität des ersten Achsbolzens 24 gegenüber dem zweiten Achsbolzen 37 gegeben ist und ein Verschwenken des Spannhebels 34 in Pfeilrichtung T und damit in Richtung auf die Felge zu einem Spannen der Traktionshilfe 1 führt.

Es ist erforderlich, dass der Spannhebel 34 nach dem Verschwenken in Pfeilrichtung T und damit dem Spannen der Traktionshilfe 1 (Fig. 4) an der Felge bzw. dem Doppelsteg 9 bzw. den beiden Teilstegen 9', 9" festgelegt wird, um die Spannung der Traktionshilfe 1 aufrechtzuerhalten.

Zu diesem Zweck ist der Spannhebel 34 vorteilhaft mittels eines in Spannhebellängsrichtung (siehe Längsachse C in Fig. 2) im Abstand g vom zweiten Achsbolzen 37 in miteinander fluchtende dritte Bohrungen 38 im dem anderen Ende 17 der Traktionshilfe 1 abgewandten Bereich des Spannhebels 34 einerseits und in den beiden Teilstegen 9', 9" andererseits einsetzbaren, versplintbaren (Splint 52) und lösbaren Arretierbolzens 39 unter Spannung der Traktionshilfe an den Teilstegen 9', 9" lösbar festlegbar ist.

Zweckmäßig sind ferner zur Aufnahme des Arretierbolzens 39 auf einem Schwenkkreis des Spannhebels 34 um den zweiten Achsbolzen 37 und im Abstand (Radius g) von diesem eine Mehrzahl von in Schwenkrichtung (Pfeil T) in Abstand h voneinander angeordneten und miteinander fluchtenden dritten Bohrungen 38 vorgesehen, derart, dass der Spannhebel 34 in unterschiedlichen Spannstellungen festlegbar ist. Dies erlaubt eine Anpassung an beispielsweise Toleranzen der Reifengrößen oder der Länge der Traktionshilfe 1 etc.

Dabei können im Spannhebel 34 auf dem gleichen Schwenkkreis D um den zweiten Achsbolzen 37 auch zumindest zwei Bohrungen 38 für den Arretierbolzen 39 vorgesehen sein, wobei der Abstand i zwischen jeweils zwei Bohrungen 38 im Spannhebel 34 größer ist als der Abstand h zwischen jeweils zwei Bohrungen 38 in den Teilstegen 9' und 9'', was Anpassungen erleichtert.

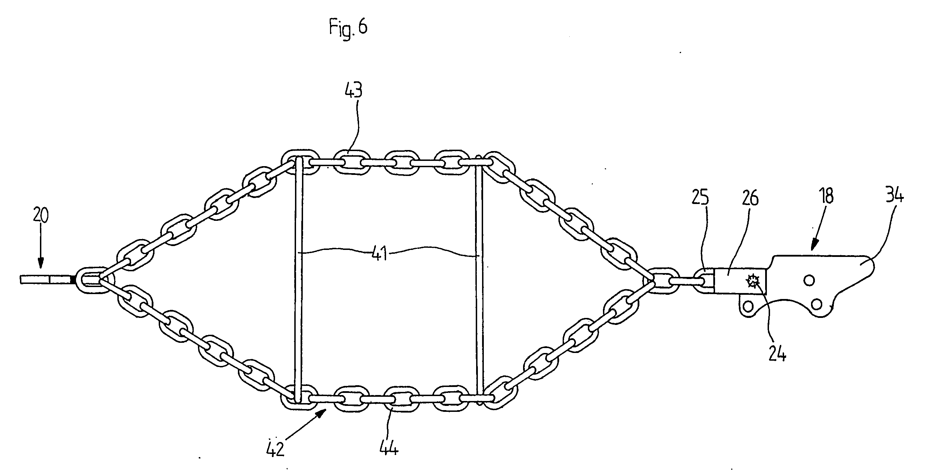

Bei der gezeigten bevorzugten Ausführungsform ist jede Traktionshilfe 1 gemäß Fig. 1, 3 und 6 eine mit Hilfe zweier in Umfangsrichtung des Reifens 3 zu beiden Seiten an den Flanken 40 desselben angeordneter stabförmiger Abstandshalter 41 ausgebreitete Kettenschlinge 42, derart, dass jeweils zwei Kettenschlingenabschnitte 43 und 44 in einem der Länge der Abstandshalter 41 entsprechenden Abstand k voneinander über die Lauffläche 45 des Reifens 3 gespannt sind.

Es versteht sich jedoch, dass die Schneekette nicht unbedingt in der beschriebenen Weise eine Art Kettennetz sein muß, vielmehr auch eine quer über die Lauffläche des Reifens zu spannende Einfachkette sein kann, nämlich dann, wenn die Bodenhaftung nicht derart schlecht ist, dass eben die Erzeugung einer größeren Haftung bzw. Reibung durch die Verwendung eines Kettennetzes mit entsprechender Mehrgliedrigkeit als angebracht erscheint. Es kann bzw. können eben gegebenenfalls auch nur eine oder mehrere Einfachketten ausreichen, um das entsprechend ausgerüstete Fahrzeug wieder flott zu machen.

## Patentansprüche

1. Vorrichtung zur lösbaren Anbringung einer Traktionshilfe (1) an einem eine Felge (2) und einen Reifen (3) mit Lauffläche (4) aufweisenden Fahrzeugrad (5), umfassend
mindestens zwei auf der Innenumfangsfläche (7) der Felge (2) jeweils im Bereich der Felgenränder festgelegte Befestigungseinrichtungen (11,12), die einander im wesentlichen lotrecht zur Felgenebene gegenüberliegend und miteinander fluchtend als Paar zugeordnet sind und
von denen die der Radinnenseite (7) zugewandte erste Befestigungseinrichtung (11) mit einem ersten Befestigungselement (13) zum Ein- und Aushängen eines an dem einen Ende (14) der Traktionshilfe (1) angebrachten, zu diesem ersten Befestigungselement (13) komplementären zweiten Befestigungselements (15) dient,
während die der Radaußenseite (A) zugewandte zweite Befestigungseinrichtung (12) mit einem zweiten Befestigungselement in Form einer Anlenkeinrichtung (16) zum Anlenken und Festspannen eines an dem anderen Ende (17) der Traktionshilfe (1) angebrachten Spannelements (18) versehen ist, derart,
dass die Traktionshilfe (1) quer über den Reifen (3) hinweg zwischen den beiden Befestigungseinrichtungen (11,12) auf der Lauffläche (4) festspannbar ist, und
mindestens eine auf der Innenumfangsfläche (7) der Felge (2) quer zur Felgenebene befestigte und sich im wesentlichen über deren Breite (B) erstreckende Befestigungsbrücke (9), an deren Enden die ein Paar bildenden Befestigungseinrichtungen (11,12) angeordnet sind,
**dadurch gekennzeichnet,**
**dass** die Befestigungsbrücke (9) als Doppelsteg mit zwei in Abstand (d) voneinander und parallel zueinander angeordneten Teilstegen (9', 9") ausgebildet ist.

2. Vorrichtung nach Anspruch 1 mit einer Felge (2), deren Felgenschüssel (6) zur Innenumfangsfläche (7) der Felge (2) hin Durchbrechungen (8) aufweist, **dadurch gekennzeichnet, dass** sich die Befestigungsbrücke (9) durch eine Durchbrechung (8) hindurcherstreckt.

3. Vorrichtung nach Anspruch 1 oder 2, **dadurch gekennzeichnet, dass** über die Innenumfangsfläche (7) verteilt in gleichen Abständen voneinander mehrere Befestigungsbrücken (9) sich durch entsprechend verteilt angeordnete Durchbrechungen (8) hindurcherstrecken.

4. Vorrichtung nach Anspruch 2, **dadurch gekennzeichnet, dass** fünf Befestigungsbrücken (9) vorgesehen sind.

5. Vorrichtung nach Anspruch 3 oder 4, **dadurch gekennzeichnet, dass** jeder Befestigungsbrücke (9) eine gesonderte Traktionshilfe (1) zugeordnet ist.

6. Vorrichtung nach Anspruch 1, **dadurch gekennzeichnet, dass** das erste Befestigungselement (13) an dem ersten Ende der Befestigungsbrücke (9) eine Öse (19) und das dazu komplementäre zweite Befestigungselement (15) an dem einen Ende (14) der Traktionshilfe (1) ein in die Öse (19) einhängbarer Haken (20) ist.

7. Vorrichtung nach Anspruch 1, **dadurch gekennzeichnet, dass** das Spannelement (18) am anderen Ende (17) der Traktionshilfe (1) mittels eines einerseits durch das Spannelement (18) und andererseits durch einen am anderen Ende (17) der Traktionshilfe (1) befestigten Beschlag (23) hindurchtretenden ersten Achsbolzens (24) angebracht ist.

8. Vorrichtung nach Anspruch 7, **dadurch gekennzeichnet, dass** der Beschlag (23) aus einem an der Traktionshilfe (1) angreifenden Kettenglied (25) besteht, an das zu dessen beiden Seiten parallelflächig zueinander zwei Laschen (26) mit den einander gegenüberliegenden Flächen (27,28) ihrer jeweils einen Enden (29,30) angeschweißt sind, während die anderen Enden (31,32) der Laschen (26) zwischen sich das Spannelement (18) und den ersten Achsbolzen (24) aufnehmen, der durch entsprechende erste Bohrungen (33) in den Laschen (26) einerseits und dem Spannelement (18) andererseits hindurchtritt und versplintbar ist.

9. Vorrichtung nach Anspruch 8, **dadurch gekennzeichnet, dass** das Spannelement (18) ein Spannhebel (34) ist, dessen Dicke (e) kleiner ist als der Abstand (d) zwischen den Teilstegen (9',9") und der sich zwischen die beiden Teilstege(9', 9" ) einsetzen lässt, und der ferner mittels eines in miteinander fluchtende zweite Bohrungen (35) im dem anderen Ende (17) der Traktionshilfe (1) zugewandten Ende (36) des Spannhebels (34) 'einerseits und in den beiden Teilstegen (9',9" ) andererseits einsetzbaren und versplintbaren, vom ersten Achsbolzen (24) quer zur Spannrichtung (S) und zur Innenumfangsfläche (7) hin versetzt einen Abstand (f) aufweisenden, zweiten Achsbolzens (37) an den Teilstegen(9', 9" ) anlenkbar ist, derart, dass durch den Abstand (f) eine Exzentrizität des ersten Achsbolzens (24) gegenüber dem zweiten Achsbolzen (37) gegeben ist und ein Verschwenken des Spannhebels (34) in Richtung auf die Felge (2) in Pfeilrichtung (T) zu einem Spannen der Traktionshilfe (1) führt.

10. Vorrichtung nach Anspruch 9, **dadurch gekennzeichnet, dass** der Spannhebel (34) mittels eines in seiner Längsrichtung (C) im Abstand (Radius g) vom zweiten Achsbolzen (37) in miteinander fluchtende dritte Bohrungen (38) im dem anderen Ende (17) der Traktionshilfe (1) abgewandten Bereich des Spannhebels (34) einerseits und in den beiden Teilstegen (9',9" ) andererseits einsetzbaren, versplintbaren und lösbaren Arretierbolzens (39) unter Spannung der Traktionshilfe (1) an den Teilstegen (9',9") lösbar festlegbar ist.

11. Vorrichtung nach Anspruch 10, **dadurch gekennzeichnet, dass** zur Aufnahme des Arretierbolzens (39) auf einem Schwenkkreis des Spannhebels (34) um den zweiten Achsbolzen (37) und im Abstand (Radius g) von diesem eine Mehrzahl von in Schwenkrichtung (Pfeil T) in Abstand (h) voneinander angeordneten und miteinander fluchtenden dritten Bohrungen (38) vorgesehen sind, derart, dass der Spannhebel (34) in unterschiedlichen Spannstellungen festlegbar ist.

12. Vorrichtung nach Anspruch 11, **dadurch gekennzeichnet, dass** im Spannhebel (34) auf dem gleichen Schwenkkreis (D) um den zweiten Achsbolzen (37) zumindest zwei Bohrungen (38) für den Arretierbolzen (39) vorgesehen sind, wobei der Abstand (i) zwischen jeweils zwei Bohrungen (38) im Spannhebel (34) größer ist als der Abstand (h) zwischen jeweils zwei Bohrungen (38) in den Teilstegen (9', 9'').

13. Vorrichtung nach Anspruch 1, **dadurch gekennzeichnet, dass** jede Traktionshilfe (1) eine mit Hilfe zweier in Umfangsrichtung des Reifens (3) zu beiden Seiten an den Flanken (40) desselben angeordneter stabförmiger Abstandshalter (41) ausgebreitete Kettenschlinge (42) ist, derart, dass jeweils zwei Kettenschlingenabschnitte (43,44) in einem der Länge der Abstandshalter (41) entsprechenden Abstand (k) voneinander über die Lauffläche (45) des Reifens (3) gespannt sind.

## Claims

1. Device for the detachable fitting of a traction aid (1) to a vehicle wheel (5) comprising a rim (2) and a tire (3) with running surfaces (4), comprising
at least two fixing devices (11, 12), applied to the inner circumferential surface (7) of the rim (2) in each case in the vicinity of the rim edges, arranged opposite each other essentially perpendicular to the plane of the rim and aligned with each other to form a pair, and
of which the first fixing device (11) facing the wheel inner side (7), having a first fixing element (13), serves for the hooking and unhooking of a second fixing element (15), complementary to said first fixing element (13), mounted on one end (14) of the traction aid (1),
while the second fixing device (12) facing the wheel outer side (A) is provided with a second fixing element in the form of a coupling device (16) for the coupling and tensioning of a tension element (18) mounted on the other end (17) of the traction aid (1),
such that the traction aid (1) may be tensioned transversely across the tire (3) on the running surface (4) between the two fixing devices (11, 12), and
at least one fixing bridge (9) fixed on the inner circumferential surface (7) of the rim (2) transverse to the plane of the rim and extending essentially over the width (B) of same, on the ends of which the fixing devices (11, 12) forming a pair are arranged,
**characterized in that**
the fixing bridge (9) is embodied as a double web with two part-webs (9', 9'') arranged at a distance (d) from each other and parallel to each other.

2. Device according to Claim 1 having a rim (2) the circumferential surface (7) of the rim (2), **characterized in that** the fixing bridge (9) extends through an opening (8).

3. Device according to Claim 1, **characterized in that** a plurality of fixing bridges (9) evenly distributed around the inner circumferential surface (7) extend through correspondingly distributed openings (8).

4. Device according to Claim 2, **characterized in that** five fixing bridges (9) are provided.

5. Device according to Claim 3 or 4, **characterized in that** a separate traction aid (1) is assigned to each fixing bridge (9).

6. Device according to Claim 1, **characterized in that** the first fixing element (13) on the first end of the fixing bridge (9) is an eye (19) and the complementary second fixing element (15) on the one end (14) of the traction aid (1) is a hook (20) that can be hooked into the eye (19).

7. Device according to Claim 1, **characterized in that** the tension element (18) is fitted to the other end (17) of the traction aid (1) by means of a first pivot pin (24) that passes on the one hand through the tension element (18) and on the other hand through a fitting (23) fitted to the other end (17) of the traction aid (1).

8. Device according to Claim 7, **characterized in that** the fitting (23) consists of a chain link (25) that engages with the traction aid (1), on both sides of which two straps (26) are welded in parallel by means of the mutually opposite surfaces (27, 28) of their respective first ends (29, 30), while the other ends (31, 32) of the straps (26) hold between them the tension element (18) and the first pivot pin (24) which passes through corresponding first holes (33) in the straps (26) on the one hand and the tension element (18) on the other hand and can be split pinned.

9. Device according to Claim 8, **characterized in that** the tension element (18) is a tension lever (34), the thickness (e) of which is less than the distance (d) between the part-webs (9', 9'') and which can be inserted between the two part-webs (9', 9"), and which can furthermore be coupled to the part-webs (9', 9'') by means of a second pivot pin (37), offset at a distance (f) from the first pivot pin (24) transverse to the direction of tensioning (S) and to the inner circumferential surface (7), which second pivot pin (37) is inserted in second holes (35) aligned with each other in the end (36) of the tension lever (34) facing towards the other end (17) of the traction aid (1), on the one hand and in both part-webs (9', 9'') on the other hand and can be split pinned, in such a manner that due to the distance (f) an eccentricity of the first pivot pin (24) exists with respect to the second pivot pin (37) and swiveling the tension lever (34) toward the rim (z) in the direction of the arrow (T) tensions the traction aid (1).

10. Device according to Claim 9, **characterized in that** the tension lever (34) can be releasably locked by tensioning the traction aid (1) against the part-webs (9', 9'') by means of a releasable locking pin (39) that can be inserted into third holes (38) aligned with each other, at a distance (radius g) from the second pivot pin (37) in the longitudinal direction (C) of said tension lever (34), in the area of the tension lever (34) facing away from the other end (17) of the traction aid (1) on the one hand and into the two part-webs (9', 9'') on the other hand and can be split pined.

11. Device according to Claim 10, **characterized in that** a plurality of third holes (38) on a circle of rotation of the tension lever (34) around the second pivot pin (37) and at a distance (radius g) from same, arranged in the direction of rotation (arrow T) at a distance (h) from each other and aligned with each other are provided to accept the locking pin (39) in such a way that the tension lever (34) can be locked in different tensioned positions.

12. Device according to Claim 11, **characterized in that** at least two holes (38) for the locking pin (39) are provided in the tension lever (34) on the same circle of rotation (D) about the second pivot pin (37), with the distance (i) between in each case two holes (38) in the tension lever (34) being greater than the distance (h) between in each case two holes (38) in the part-webs (9', 9").

13. Device according to Claim 1, **characterized in that** each traction aid (1) consists of a chain sling (42) held apart by two bar-type spreaders (41) arranged in the circumferential direction of the tire (3) at both sides on the edges (40) of same in such a manner that in each case two chain sling sections (43, 44) are tensioned over the running surface (45) of the tire (3) and spaced apart from each other at a distance (k) corresponding to the length of the spreaders (41).

## Revendications

1. Dispositif pour le montage amovible d'un accessoire d'aide à la traction (1) sur une roue de véhicule (5) présentant une jante (2) et un pneu (3) avec une surface de roulement (4), comprenant :
au moins deux dispositifs de fixation (11, 12) fixés sur la surface périphérique intérieure (7) de la jante (2), à chaque fois dans la région des bords de la jante, lesquels sont en regard l'un de l'autre essentiellement à la verticale du plan de la jante et sont associés en affleurement l'un à l'autre sous forme de paire, et
dont le premier dispositif de fixation (11) tourné vers le côté intérieur de la roue (7), conjointement avec un premier élément de fixation (13), sert à accrocher et décrocher un deuxième élément de fixation (15) complémentaire à ce premier élément de fixation (13), monté sur l'une des extrémités (14) de l'accessoire d'aide à la traction (1),
tandis que le deuxième dispositif de fixation (12) tourné vers le côté extérieur de la roue (A), conjointement avec un deuxième élément de fixation en forme de dispositif d'articulation (16), sert à articuler et serrer un élément de serrage (18) monté sur l'autre extrémité (17) de l'accessoire d'aide à la traction (1), de telle sorte que
l'accessoire d'aide à la traction (1) puisse être serré fixement transversalement au-delà du pneu (3) entre les deux dispositifs de fixation (11, 12) sur la surface de roulement (4), et
comprenant au moins un pont de fixation (9) fixé sur la surface périphérique intérieure (7) de la jante (2) transversalement au plan de la jante et s'étendant essentiellement sur sa largeur (B), aux extrémités duquel sont disposés les dispositifs de fixation (11, 12) formant une paire,
**caractérisé en ce que**
le pont de fixation (9) est réalisé sous forme de double nervure avec deux nervures partielles (9', 9") espacées d'une distance (d) l'une de l'autre et disposées parallèlement l'une à l'autre.

2. Dispositif selon la revendication 1, comprenant une jante (2), dont le disque de jante (6) présente des ouvertures (8) vers la surface périphérique intérieure (7) de la jante (2), **caractérisé en ce que** le pont de fixation (9) s'étend à travers une ouverture (8).

3. Dispositif selon la revendication 1 ou 2, **caractérisé en ce que** plusieurs ponts de fixation (9) répartis à égales distances les uns des autres s'étendent sur la surface périphérique intérieure (7) à travers des ouvertures (8) disposées de manière répartie en conséquence.

4. Dispositif selon la revendication 2, **caractérisé en ce que** l'on prévoit cinq ponts de fixation (9).

5. Dispositif selon la revendication 3 ou 4, **caractérisé en ce qu'**un accessoire d'aide à la traction (1) séparé est associé à chaque pont de fixation (9).

6. Dispositif selon la revendication 1, **caractérisé en ce que** le premier élément de fixation (13) à la première extrémité du pont de fixation (9) est un oeillet (19) et le deuxième élément de fixation (15) complémentaire à celui-ci à l'une des extrémités (14) de l'accessoire d'aide à la traction (1) est un crochet (20) pouvant être accroché à l'oeillet (19).

7. Dispositif selon la revendication 1, **caractérisé en ce que** l'élément de serrage (18) à l'autre extrémité (17) de l'accessoire d'aide à la traction (1) est monté au moyen d'un premier boulon (24) traversant d'une part l'élément de serrage (18) et d'autre part une ferrure (23) fixée à l'autre extrémité (17) de l'accessoire d'aide à la traction (1).

8. Dispositif selon la revendication 7, **caractérisé en ce que** la ferrure (23) se compose d'un maillon (25) venant en prise sur l'accessoire d'aide à la traction (1), sur lequel, sur ses deux côtés, deux pattes (26) de surfaces parallèles l'une à l'autre, sont soudées aux surfaces mutuellement opposées (27, 28) de leurs premières extrémités respectives (29, 30), tandis que les autres extrémités (31, 32) des pattes (26) reçoivent entre elles l'élément de serrage (18) et le premier boulon (24), qui traverse des premiers alésages correspondants (33) dans les pattes (26) d'une part et dans l'élément de serrage (18) d'autre part et qui peut être fendu.

9. Dispositif selon la revendication 8, **caractérisé en ce que** l'élément de serrage (18) est un levier de serrage (34), dont l'épaisseur (e) est inférieure à la distance (d) entre les nervures partielles (9', 9") et qui peut être inséré entre les deux nervures partielles (9', 9"), et qui en outre peut être articulé aux nervures partielles (9', 9") au moyen d'un deuxième boulon (37) insérable dans deux alésages (35) alignés l'un avec l'autre dans l'extrémité (36) du levier de serrage (34) tournée vers l'autre extrémité (17) de l'accessoire d'aide à la traction (1) d'une part et dans les deux nervures partielles (9', 9") d'autre part et pouvant être fendu, et présentant une distance (f) depuis le premier boulon (24) transversalement à la direction de serrage (S) et décalée vers la surface périphérique intérieure (7), de telle sorte que l'on obtienne par la distance (f) une excentricité du premier boulon (24) par rapport au deuxième boulon (37), et qu'un pivotement du levier de serrage (34) dans la direction de la jante (2) dans la direction de la flèche (T) conduise à un serrage de l'accessoire d'aide à la traction (1).

10. Dispositif selon la revendication 9, **caractérisé en ce que** le levier de serrage (34) peut être fixé de manière amovible aux nervures partielles (9', 9") par serrage de l'accessoire d'aide à la traction (1) au moyen d'un boulon de blocage (39) pouvant être fendu et desserré, pouvant être inséré dans sa direction longitudinale (C) à distance (rayon g) du deuxième boulon (37) dans des troisièmes alésages (38) en alignement les uns avec les autres dans la région du levier de serrage (34) opposée à l'autre extrémité (17) de l'accessoire d'aide à la traction (1) d'une part et dans les deux nervures partielles (9', 9") d'autre part.

11. Dispositif selon la revendication 10, **caractérisé en ce que** pour recevoir le boulon de blocage (39) sur un cercle de pivotement du levier de serrage (34) autour du deuxième boulon (37) et à distance (rayon g) de celui-ci, une pluralité de troisièmes alésages (38) disposés dans une direction de pivotement (flèche T) à distance (h) les uns des autres et en alignement les uns avec les autres sont prévus, de telle sorte que le levier de serrage (34) puisse être fixé dans des positions de serrage différentes.

12. Dispositif selon la revendication 11, **caractérisé en ce qu'**au moins deux alésages (38) pour le boulon de blocage (39) sont prévus dans le levier de serrage (34) sur le même cercle de pivotement (D) autour du deuxième boulon (37), la distance (i) entre deux alésages (38) respectifs dans le levier de serrage (34) étant supérieure à la distance (h) entre deux alésages (38) respectifs dans les nervures partielles (9', 9").

13. Dispositif selon la revendication 1, **caractérisé en ce que** chaque accessoire d'aide à la traction (1) est une boucle de chaîne (42) élargie à l'aide de deux éléments d'espacement (41) en forme de barre disposés dans la direction périphérique du pneu (3) des deux côtés sur les flancs (40) du pneu, de telle sorte que deux portions de boucle de chaîne (43, 44) respectives soient tendues sur la surface de roulement (45) du pneu (3) à une distance (k) l'une de l'autre correspondant à la longueur des éléments d'espacement (41).
